# EUROPEAN PATENT SPECIFICATION

(11) **EP 3 573 074 B1**
(45) Date of publication and mention of the grant of the patent: **04.11.2020**
(21) Application number: 18174324.6
(22) Date of filing: 25.05.2018
(51) Int. Cl.: G21C 3/32, G21C 3/322, G21C 3/326, G21C 7/04

(54) **AN AUXILIARY DEVICE FOR A FUEL ASSEMBLY, A FUEL ASSEMBLY, AND A METHOD OF OPERATING A PRESSURIZED WATER REACTOR**
HILFSVORRICHTUNG FÜR EIN BRENNSTABBÜNDEL, BRENNSTABBÜNDEL UND VERFAHREN ZUM BETRIEB EINES DRUCKWASSERREAKTORS
DISPOSITIF AUXILIAIRE POUR ENSEMBLE DE COMBUSTIBLE, ENSEMBLE DE COMBUSTIBLE ET PROCÉDÉ D'EXPLOITATION D'UN RÉACTEUR À EAU SOUS PRESSION

(43) Date of publication of application: 27.11.2019
(73) Proprietor: Thor Energy AS, 0278 Oslo (NO)
(72) Inventor: LAU, Cheuk Wah, 0560 Oslo (NO)
(74) Representative: Bjerkéns Patentbyrå KB (Stockholm)

(56) References cited:
- EP-A1- 0 151 969
- JP-A- H03 183 994
- US-A1- 2009 041 175

## Description

### TECHNICAL FIELD OF THE INVENTION

The present invention refers to an auxiliary device for a fuel assembly of a pressurized water reactor, PWR or VVER, according to the preamble of claim 1. The present invention also refers to a fuel assembly for a pressurized water reactor according to the preamble of claim 11. Furthermore, the present invention refers to a method of operating a pressurized water reactor according to the preamble of claim 12.

### BACKGROUND OF THE INVENTION AND PRIOR ART

The core of the pressurized water reactor comprises a large number of fuel assemblies. Each fuel assembly comprises fuel rods, for instance 17x17 fuel rods. A plurality of guide thimbles, for instance 8-24 guide thimbles, are located among and in parallel with the fuel rods. Each guide thimble may occupy the space of a fuel rod and thus replace the fuel rod in the fuel assembly. The guide thimbles, or guide tubes, are configured to enable introduction of control rods and/or instrumentation devices. Each control rod contains a neutron absorbing material. By lowering the control rods into the thimble tubes, the nuclear reaction can be reduced or stopped if the control rods are completely inserted into the fuel assembly.

The guide thimbles of a large percentage of the fuel assemblies of a pressurized water reactor normally never receives any control rod or instrumentation device. Thus there exists an empty space in the reactor that is not of any use, and that may deteriorate the power profile of the reactor. This empty space may contain water, which is a moderator increasing the amount of available thermal neutrons.

The fuel rods contain fissile material, typically in the form of UO₂. When a new fuel assembly, containing fresh fuel, is used in a nuclear reactor, there will be an excess of reactivity in the fuel assembly. Therefore, the nuclear fuel in the fuel rods usually contain so-called burnable absorbers (or burnable poison), for example gadolinium, boron or erbium. The burnable absorber will absorb neutrons, wherein the burnable absorber will be consumed. Thus, after a certain time of operation, the amount of burnable absorber is reduced, although not completely eliminated, in the nuclear fuel. In this manner, the excess of reactivity in the fresh fuel can be controlled.

EP 151 969 discloses a fuel assembly comprising fuel rods and guide thimbles, and a guide-thimble plug assembly with a number of thimble plugs inserted in a respective one of the guide thimbles. Each of the thimble plugs comprises a cladding tube containing nuclear fuel, such as natural, depleted and/or enriched uranium.

SE-429 271 discloses a fuel assembly comprising a bundle of fuel rods and a plurality of absorber rods arranged in the bundle. Each of the absorber rods comprises a fertile material of natural uranium or thorium, or uranium or thorium having a content of fissile material less than the content thereof in natural uranium and thorium, respectively.

US 2014/334595 A1 refers to an elongated fuel element and a fuel assembly. The fuel element has a multi-lobed profile that forms spiral ribs. Burnable poison rods are provided in the fuel assembly and are introduced in guide tubes that do not receive control rods. The burnable poison rods may be locked in the guide tubes of the fuel assembly and may be removed when the fuel assembly is relocated for the next fuel cycle. The document also discusses the provision of burnable poison in the fuel elements, i.e. in the fuel kernel, the fuel cladding or any other suitable part of the fuel element. The burnable poison may be present in the form of 5-15 weight percent of gadolinium in the fuel kernel.

EP 2 889 878 discloses a control rod guide thimble for receiving a control rod. Burnable absorber is integrated in the walls of the guide thimble. The burnable absorber may for instance comprise in Gd₂O₃. In a PWR, gadolinium and erbium compounds, typically Gd₂O₃ and Er₂O₃, are appropriately mixed with UO₂ nuclear fuels.

### SUMMARY OF THE INVENTION

The purpose of the present invention is to improve the power profile of the reactor, and to increase the quantity of fissile material in the reactor and the length of the fuel cycle.

This purpose is achieved by the auxiliary device initially defined. According to the invention, each of the rods comprises a minor amount of a neutron absorbing material contained in the inner space of the cladding tube.

Thanks to the invention, empty space of the non-used guide thimbles may at least partly be used for a major amount of a fissile material and a minor amount of a neutron absorbing material. In such a way, no burnable absorber needs to be contained in the fuel rods of the fuel assembly. In particular, all fuel rods of all fuel assemblies of the core of the reactor may thus contain only fissile material, and thus no neutron absorbing material. The neutron absorbing material of the auxiliary devices is sufficient for the required reduction of the reactivity during the fuel cycle.

The neutron absorbing material of the rods may thus contribute to a reduction of the reactivity during an initial phase of a fuel cycle. This an important advantage, especially for fuel assemblies containing fresh fuel.

The fissile material of the rods may contribute to a higher reactivity at a later phase of the fuel cycle, especially as the absorbing capability of the neutron absorbing material decreases, and to a prolongation of the fuel cycle.

The power profile may thus be improved, with a more constant reactivity during the whole fuel cycle.

After the fuel cycle has been finished, the auxiliary device may be removed from all fuel assemblies. Since no neutron absorbing material then may be contained in the fuel rods of the fuel assemblies, it may be ensured that there is no rest of neutron absorbing material in the fuel assemblies.

According to an embodiment of the invention, the fissile material comprises or consists of UO₂ with enriched uranium.

According to an embodiment of the invention, the uranium of the fissile material has a concentration of U²³⁵ that lies in the range 1 to 3%, in particular a concentration in the range of 1 to 2,5%, and more particularly a concentration of U²³⁵ of 2%, or approximately 2%.

According to the invention, the neutron absorbing material comprises at least one of gadolinium, boron and erbium. Gadolinium, boron and erbium all have a relatively high neutron cross-section, and are suitable as neutron absorbing materials.

According to an embodiment of the invention, the neutron absorbing material comprises gadolinium, especially in the form of Gd₂O₃. Gadolinium is advantageous with respect to the rate at which it is consumed during the operation of the reactor and an amount of gadolinium securing a suitable neutron absorption during the fuel cycle may be easily calculated.

According to an embodiment of the invention, the percentage of the neutron absorbing material in each of the rods is 3-12% and the percentage of the fissile material in each of the rods is 88-97%. Preferably, the percentage of the neutron absorbing material in each of the rods is 6-10% and the percentage of the fissile material in each of the rods is 90-94%. More preferably, the percentage of the neutron absorbing material in each of the rods is approximately 8%, or 8%, and the percentage of the fissile material in each of the rods is approximately 92%, or 92%. These percentages of neutron absorbing material are especially suitable for gadolinium.

According to an embodiment of the invention, the fissile material and the neutron absorbing material, for instance Gd₂O₃ or Er₂O₃, are mixed with each other, in particular homogeneously mixed with each other.

According to an embodiment of the invention, the fissile material and the neutron absorbing material are contained in pellets contained in the inner space of the cladding tube. The fissile material and the neutron absorbing material may thus be mixed, or homogenously mixed, with each other in each of the pellets.

According to another embodiment of the invention, the fissile material is contained in pellets and the neutron absorbing material, for instance boron in the form of ZrB₂, is applied as a coating, or thin coating, on the pellets.

According to an embodiment of the invention, it is possible to mix more than one type of neutron absorbing material to ensure the best reactivity control and power profile during fuel cycle

According to an embodiment of the invention, the auxiliary device comprises 4 to 24 of said rods.

According to an embodiment of the invention, the cladding tube of the rods is made of stainless steel. Stainless steel is advantageous due to its tolerances to high temperatures and its high mechanical strength. Stainless steel is normally used in control rods.

According to an embodiment of the invention, each of the rods has a length that corresponds to the length of the fuel rods of the fuel assembly, especially a length of at least 3 m.

According to the invention, each of the rods has an outer diameter that is smaller than the inner diameter of the respective guide thimble to permit a flow of coolant between in an annular space between the rod and the guide thimble. The coolant flow may ensure a proper cooling of the rod.

According to an embodiment of the invention, the auxiliary device comprises a number of elongated plugs attached to the carrying structure and extending in parallel with each other and the rods in a direction away from the carrying structure, and wherein the elongated plugs are configured to be inserted into a respective guide thimble receiving no one of the rods. Such elongated plugs introduced in the guide thimbles lacking rods of the auxiliary device may prevent the flow of coolant through the guide thimbles receiving no one of the rods.

According to an embodiment of the invention, the elongated plugs may have a length of 15-35 cm.

According to an embodiment of the invention, the elongated plugs may have an outer diameter that is smaller than the inner diameter of the respective guide thimble to permit introduction of the elongated plug into the guide thimble but to prevent any flow of coolant through the guide thimble.

The purpose is also achieved by the fuel assembly initially defined, characterized in that the fuel assembly comprises an auxiliary device as defined above, and that the rods of the auxiliary device are inserted into a respective one of at least some of the guide thimbles.

According to an embodiment of the invention, the fuel assembly comprises fresh nuclear fuel.

The purpose is also achieved by the method initially defined, which is characterized in that the method comprises the step of introducing auxiliary devices as defined above into guide thimbles of at least some of the first fuel assemblies.

The method may comprise the preceding step of loading the first and second fuel assemblies into the core of the pressurized water reactor, wherein the auxiliary devices are introduced before the pressurized water reactor is started, or before the fuel assemblies are loaded into the core of the reactor.

The method may comprise the further step of withdrawing the auxiliary devices from the respective first fuel assemblies after a first fuel cycle.

The method may comprise the further step of introducing control rods into guide thimbles of one of the first fuel assemblies, which guide thimbles receive no one of the rods.

### BRIEF DESRIPTION OF THE DRAWINGS

The present invention is now to be explained more closely through a description of various embodiments and with reference to the drawings attached hereto.
- Fig 1: discloses a schematic view of a reactor vessel of a nuclear light water reactor.
- Fig 2: discloses a schematic side view of a fuel assembly of a core of the reactor in Fig 1.
- Fig 3: discloses a schematic cross-sectional view of the fuel assembly in Fig 2.
- Fig 4: discloses a schematic side view of an auxiliary device according to an embodiment of the present invention.
- Fig 5: discloses schematically a rod of the auxiliary device in Fig 4.
- Fig 6: discloses a schematic cross-sectional view of the rod introduced into a guide thimble of the fuel assembly.

### DETAILED DESCRIPTION OF VARIOUS EMBODIMENTS

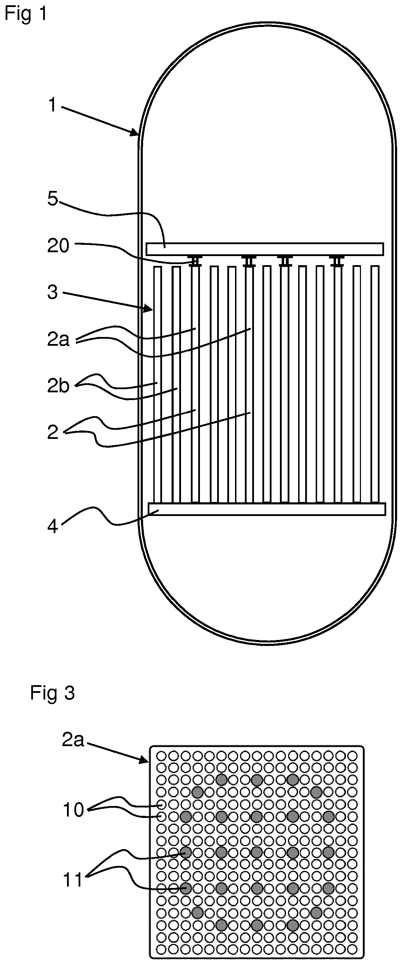

Fig 1 discloses a reactor vessel 1 of a nuclear light water reactor and more precisely a pressurized water reactor, PWR. The reactor vessel 1 comprises and encloses a large number of such fuel assemblies 2 arranged in a manner known per se in the core 3 in the reactor vessel 1.

The fuel assemblies 2 are arranged in the core 3 between a lower core plate 4 and an upper core plate 5.

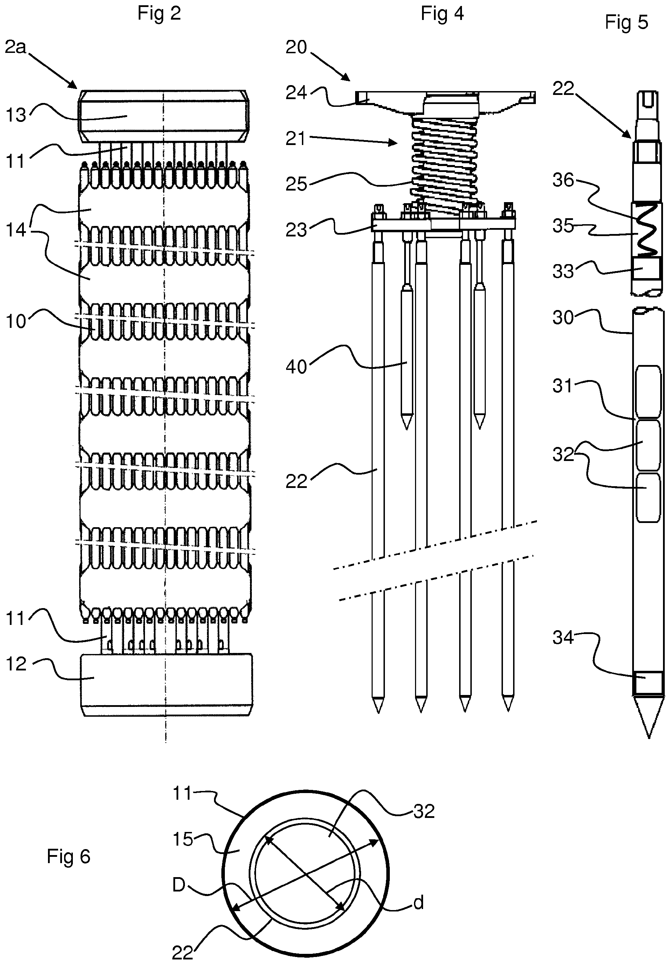

As is illustrated in Figs 2 and 3, each of the fuel assemblies 2 comprises a plurality of fuel rods 10 and a plurality of guide thimbles 11 located among and in parallel with the fuel rods 10. The fuel assembly 2 typically comprises 17x17 positions for receiving fuel rods 10 and guide thimbles 11, as schematically indicated in Fig 3. Typically, 4-24 of these positions may be occupied by guide thimbles 11 (grey in Fig 3) and the rest of the positions by fuel rods 10 (white in Fig 3).

It should be mentioned that the fuel assembly 2 may comprise another number of positions for fuel rods 10 and guide thimbles 11, for instance 14x14 positions, 15x15 positions, 16x16 positions, 18x18 positions or 19x19 positions.

The fuel rods 10 and the guide thimbles 11 may be provided between a bottom nozzle 12 and top nozzle 13 of the fuel assembly 2. A number of spaced apart spacers 14 are engaging the guide thimbles 11 and the fuel rods 10 in a generally known manner.

The fuel rods 10 of the fuel assemblies 2 contains nuclear fuel, i.e. a fissile material such as UO₂, wherein the uranium may be enriched to contain approximately 4.95% of U²³⁵.

The fuel assemblies 2 comprises first fuel assemblies 2a and second fuel assemblies 2b. The only difference between the first and second fuel assemblies 2a, 2b is that the first fuel assemblies 2a comprise fresh nuclear fuel and the second fuel assemblies 2b comprise partly burnt nuclear fuel, i.e. nuclear fuel that has been used in one or more previous fuel cycles.

The guide thimbles 11, or guide tubes, are configured to enable introduction of control rods (not disclosed in the drawings) and/or one or more instrumentation devices (not disclosed in the drawings) during operation. Each control rod contains a neutron absorbing material. By lowering the control rods into the thimble tubes 11, the nuclear reaction can be reduced, or stopped if the control rods are completely inserted into the fuel assembly 2 in a generally known manner.

A coolant is flowing through the reactor vessel 1 and the core 3 for cooling the fuel assemblies 2 and absorbing the heat produced by the fission of the nuclear fuel, and for moderating the neutrons created during the fission in a generally known manner. The coolant also flows through the empty guide tubes 11.

Fig 4 discloses an auxiliary device 20 comprising a carrying structure 21, and a plurality of rods 22 suspended in the carrying structure 21 to extend in parallel with each other in a direction away from the carrying structure 21.

The carrying structure comprises carrying member 23 to which the rods 22 are attached. The carrying member 23 is connected to an upper arm member 24 via a spring 25. The carrying member 23 and the upper arm member 24 may be pressed towards each other against the force exerted by the spring 25.

As is indicated in Fig 1, such an auxiliary device 20 is introduced into some of the fuel assemblies 2, and more precisely into the first fuel assemblies 2a comprising fuel rods 10 with fresh nuclear fuel. After having been introduced, the auxiliary device 20 may rest on the top nozzle 13 by means of the gravity.

Thus, the rods 22 of the auxiliary device 20 are inserted into a respective one of at least some of the guide thimbles 11 of the first fuel assembly 2a. The auxiliary device may comprise 4-24 rods 22, preferably 8-20 rods 22, more preferably 10-18 rods 22, and most preferably 12-16 rods 22.

Each of the rods 22 of the auxiliary device 20 may have a length that corresponds to the length of the fuel rods 10 of the fuel assembly 2a, especially a length of at least 3 m.

Each of the rods 22 of the auxiliary device 20 comprises a cladding tube 30 defining an inner space 31, see Fig 5. The cladding tube 30 of the rods 22 may be made of stainless steel, which is advantageous with respect to heat resistance and mechanical strength. Examples of suitable stainless steels are 304, 310, 302, 315 and 348. However, it should be noted that the cladding tube 30 may be made of other materials, especially those selected among different zirconium based alloys.

According to the invention, each of the rods 22 of the auxiliary device 20 has an outer diameter d that is smaller than the inner diameter D of the respective guide thimble 11, as can be seen in Fig 6. Consequently, there is a flow of the coolant in an annular space 15 formed in the guide thimble 11 between the rod 22 and the guide thimble 11. A suitable flow velocity of the coolant flow through the annular space 15 may be 2-4 m/s, especially 2,5-3,5 m/s. The coolant flow through the annular space 15 may ensure a proper cooling of the rod 22. For example, the outer diameter d of the rod 22 may be 6-9 mm, preferably 7-8 mm, more preferably 7,5 mm, or approximately 7,5 mm. The inner diameter D of the guide thimble 11 may be 10-12 mm, especially approximately 11 mm.

Each of the rods 22 of the auxiliary device 20 comprises a major amount of a fissile material and a minor amount of a neutron absorbing material. The fissile and neutron absorbing materials are contained in the inner space 31 of the cladding tube 30. Thus, there is more, or significantly more, fissile material than neutron absorbing material in each of the rods 22.

According to a first embodiment, the fissile material comprises or consists of enriched uranium, in particular uranium in the form of consists of UO₂. The uranium of the fissile material may thus have a higher concentration of U²³⁵ than natural uranium.

Furthermore, the uranium of the fissile material may have a lower concentration of U²³⁵ than the uranium contained in the fuel rods 10 of the fuel assemblies 2a.

In particular, the uranium of the fissile material may have a concentration of U²³⁵ that lies in the range 1 to 3%, preferably a concentration in the range of 1 to 2,5%, and more preferably a concentration of U²³⁵ of 2%, or approximately 2%.

In the first embodiment, the neutron absorbing material comprises gadolinium, especially in the form of Gd₂O₃.

The percentage of the neutron absorbing material in each of the rods 22 may be 3-12% and the percentage of the fissile material in each of the rods 22 may be 88-97%. Preferably, the percentage of the neutron absorbing material in each of the rods 22 may be 6-10% and the percentage of the fissile material in each of the rods 22 may be 90-94%. More preferably, the percentage of the neutron absorbing material in each of the rods 22 may be approximately 8%, or 8%, and the percentage of the fissile material in each of the rods 22 may be approximately 92%, or 92%.

In the first embodiment, the fissile material and the neutron absorbing material are mixed with each other in the rods 22. The fissile material and the neutron absorbing material are contained in a mixed, or homogenously mixed, manner in pellets 32 arranged in a pile of pellets 32 in the inner space 31 of the cladding tube 30 of the rods 22. Only three of the plurality of pellets 32 are disclosed in Fig 5.

A fill gas may be contained in the inner space 31. A suitable fill gas may be helium. The internal pressure of the fill gas in the inner space 31 may be slightly above atmospheric pressure, for instance 1,5 to 2 bars. Such a relatively low over pressure may secure a possibility to detect any defect or crack in the cladding tube 30, and at the same time prevent any tendency of lateral swelling of the cladding tube 30 during use of the auxiliary device 20 in the pressurized water reactor.

An upper insulating pellet 33 may be provided on top of the pile of pellets 32 and a lower insulating pellet 34 may be provided beneath the pile of pellets 32. A plenum 35 comprising a plenum spring 36 may be provided to compress the pile of pellets 32. The plenum 35 and the plenum spring 36 may be provided above the upper insulating pellet 33.

According to a second embodiment, the auxiliary device 20 may comprise a number of elongated plugs 40 attached to the carrying structure 21 and extending in parallel with each other and with the rods 22 in a direction away from the carrying structure 21. The elongated plugs 40 may be configured to be inserted into a respective guide thimble 11 which do not receive any one of the rods 22.

As can be seen in Fig 4, also the elongated plugs 40 may be attached to the carrying member 23 of the carrying structure 31.

The elongated plugs 40, introduced in the guide thimbles 11 lacking rods 22 of the auxiliary device 20, may prevent the flow of the coolant through the guide thimbles 11 that receives no one of the rods 22.

The elongated plugs 40 may have an outer diameter that is smaller than the inner diameter of the respective guide thimble 11 only to permit introduction of the elongated plug 40 into the guide thimble 11, but that is large enough to prevent any flow of the coolant through the guide thimble 11 into which the elongated plug 40 is introduced.

The elongated plugs 40 may be shorter, or significantly shorter, than the rods 22, and may have a length of 15-35 cm, for instance 25 cm, or approximately 25 cm.

The elongated plugs 40 may be made of stainless steel.

During operation of the pressurized water reactor, a respective one of the auxiliary devices 20 is introduced into the guide thimbles 11 of at least some, or each, of the first fuel assemblies 2a containing fresh nuclear fuel. The core 3 may contain up to 50% of first fuel assemblies 2a, with fresh fuel, into which a respective auxiliary device 20 may be introduced. However, typically the core 3 may contain 25% first fuel assemblies 2a, wherein a respective auxiliary device 20 may be introduced into 80% of these first fuel assemblies 2a.

The first and second fuel assemblies 2a, 2b are first loaded into the core 3 of the reactor vessel 1. The auxiliary devices 20 may be introduced into the first fuel assemblies 2a before the loading or after the loading of the first and second fuel assemblies 2a, 2b, at least before the pressurized water reactor is started.

When the first and second fuel assemblies 2a, 2b have been loaded and the auxiliary devices 20 are introduced into the respective first fuel assemblies 2a, the upper core plate 4 is lowered against the arm members 24 of the carrying structure 21, thereby compressing the spring 25 in order to firmly hold the rods 22, and possibly the elongated plugs 40, in place in the respective guide thimbles 11.

After the fuel cycle has been finished, the auxiliary devices 20 are withdrawn from the respective first fuel assemblies 2a after a first fuel cycle.

In the following fuel cycle, when all auxiliary devices 20 have been removed, the pressurized water reactor may thus be operated without any neutron absorbing material from the previous fuel cycle. New devices 20 may be introduced into new fuel assemblies 2a in the following fuel cycle.

It should be noted that the auxiliary device 20 may be realized without the elongated plugs 40. Thereby, some empty guide thimbles 11 may remain in the first fuel assemblies 2a. It is then possible to introduce control rods into these empty guide thimble 11 also when an auxiliary device 20 is introduced in the first fuel assembly 2a.

According to further embodiments, gadolinium may be replaced as neutron absorbing material by erbium, for instance in the form of Er₂O₃, or boron, for instance in the form of ZrB₂. Erbium, Er₂O₃, may be mixed in the pellets 32 in the same manner as Gd₂O₃. Boron, ZrB₂, may be applied as a coating, or thin coating, on the surface of the pellets 32.

The present invention is not limited to the embodiments disclosed but may be varied and modified within the scope of the following claims.

## Claims

1. An auxiliary device (20) for a fuel assembly (2a) of a pressurized water reactor, PWR, wherein the fuel assembly (2a) comprises fuel rods (10) and a plurality of guide thimbles (11) located among and in parallel with the fuel rods (10) and configured to enable introduction of control rods and/or instrumentation devices,
wherein the auxiliary device (20) comprises
a carrying structure (21), and
a plurality of rods (22) suspended in the carrying structure (21) to extend in parallel with each other in a direction away from the carrying structure (21),
wherein each of the rods (22) comprises a cladding tube (30) defining an inner space (31),
wherein the rods (22) are configured to be inserted into a respective one of at least some of the guide thimbles (11) of the fuel assembly (2a),
wherein each of the rods (22) comprises a major amount of a fissile material contained in the inner space (31) of the cladding tube (30),
wherein the fissile material comprises enriched uranium, **characterized in that** each of the rods (22) comprises a minor amount of a neutron absorbing material comprising at least one of gadolinium, boron and erbium and being contained in the inner space (31) of the cladding tube (30), and
wherein each of the rods (22) has an outer diameter that is smaller than an inner diameter of the respective guide thimble (11), such that there is in use a flow of coolant in an annular space (15) between the rod (22) and the guide thimble (11).

2. The auxiliary device (20) according to claim 1, wherein the uranium of the fissile material has a concentration of U²³⁵ that lies in the range 1 to 3%.

3. The auxiliary device (20) according to any one of the preceding claims, further comprising at least one of the following selections:
selection of the outer diameter from a group consisting of: 6-9 mm, 7-8 mm, and 7,5 mm.

4. The auxiliary device (20) according to claim 1 wherein the neutron absorbing material comprises gadolinium, especially in the form of Gd₂O₃.

5. The auxiliary device (20) according to any one of claims 1 and 4, wherein the percentage of the neutron absorbing material in each of the rods (22) is 3-12% and the percentage of the fissile material in each of the rods (22) is 88-97%.

6. The auxiliary device (20) according to any one of the preceding claims, wherein the fissile material and the neutron absorbing material are mixed with each other.

7. The auxiliary device (20) according to claim 6, wherein the fissile material and the neutron absorbing material are contained in pellets (32) contained in the inner space (31) of the cladding tube (30).

8. The auxiliary device (20) according to any one of the preceding claims, wherein the auxiliary device (20) comprises 4 to 24 of said rods (22).

9. The auxiliary device (20) according to any one of the preceding claims, wherein each of the rods (22) has a length that corresponds to the length of the fuel rods (10) of the fuel assembly (2a).

10. The auxiliary device (20) according to any one of the preceding claims, wherein the auxiliary device (20) comprises a number of elongated plugs (40) attached to the carrying structure (21) and extending in parallel with each other and the rods (22) in a direction away from the carrying structure (21), and wherein the elongated plugs (40) are configured to be inserted into a respective guide thimble (11) receiving no one of the rods (22).

11. A fuel assembly (2a) for a pressurized water reactor, PWR, comprising fuel rods (10) and a plurality of guide thimbles (11) located among and in parallel with the fuel rods (10), **characterized in that** the fuel assembly (2a) comprises an auxiliary device (20) according to any one of claims 1-10 and that the rods (22) of the auxiliary device (20) are inserted into a respective one of at least some of the guide thimbles (11) .

12. A method of operating a pressurized water reactor, PWR, comprising a plurality of first fuel assemblies (2a) and second fuel assemblies (2b), wherein the first fuel assemblies (2a) comprise fresh nuclear fuel and the second fuel assemblies (2b) comprise partly burnt nuclear fuel, **characterized in that** the method comprises the step of introducing auxiliary devices (20) according to any one of claims 1-10 into guide thimbles (11) of at least some of the first fuel assemblies (2a).

13. The method according to claim 12, comprising the preceding step of loading the first and second fuel assemblies (2a, 2b) into the core (3) of the pressurized water reactor, wherein the auxiliary devices (20) are introduced at least before the pressurized water reactor is started.

14. The method according to claim 13, comprising the further step of withdrawing the auxiliary devices (20) from the respective first fuel assemblies (2a) after a first fuel cycle.

15. The method according to any one of claims 12 to 14, comprising the further step of introducing control rods into guide thimbles (11) of one of the first fuel assemblies (2a), which guide thimbles (11) receive no one of the rods (22).

## Patentansprüche

1. Hilfsvorrichtung (20) für ein Brennstabbündel (2a) eines Druckwasserreaktors, *Pressurized Water Reactor -* PWR, wobei das Brennstabbündel (2a) Brennstäbe (10) und eine Mehrzahl von Führungsfingerhutrohren (11) umfasst, die sich inmitten der Brennstäbe (10) befinden und parallel zu diesen verlaufen und dazu ausgestaltet sind, das Einführen von Steuerstäben und/oder Instrumentierungsvorrichtungen zu ermöglichen,
wobei die Hilfsvorrichtung (20)
eine Tragstruktur (21) und
eine Mehrzahl von Stäben (22), die so in der Tragstruktur (21) eingehängt sind, dass sie sich parallel zueinander in einer von der Tragstruktur (21) weg verlaufenden Richtung erstrecken, umfasst
wobei jeder der Stäbe (22) ein Hüllrohr (30) umfasst, das einen Innenraum (31) ausbildet, wobei die Stäbe (22) dazu ausgestaltet sind, in ein jeweiliges von zumindest einigen der Führungsfingerhutrohre (11) des Brennstabbündels (2a) eingeführt zu werden,
wobei jeder der Stäbe (22) eine größere Menge eines Spaltmaterials umfasst, das in dem Innenraum (31) des Hüllrohres (30) enthalten ist,
wobei das Spaltmaterial angereichertes Uran umfasst,
**dadurch gekennzeichnet, dass** jeder der Stäbe (22) eine geringe Menge eines neutronenabsorbierenden Materials umfasst, das mindestens eines aus Gadolinium, Bor und Erbium umfasst und in dem Innenraum (31) des Hüllrohres (30) enthalten ist, und
wobei jeder der Stäbe (22) einen Außendurchmesser aufweist, der kleiner als ein Innendurchmesser des jeweiligen Führungsfingerhutrohres (11) ist, so dass während des Betriebes ein Kühlmittel in einem ringförmigen Raum (15) zwischen dem Stab (22) und dem Führungsfingerhutrohr (11) strömt.

2. Hilfsvorrichtung (20) nach Anspruch 1, wobei das Uran des Spaltmaterials eine Konzentration von U²³⁵ aufweist, die im Bereich von 1 bis 3 % liegt.

3. Hilfsvorrichtung (20) nach einem der vorangehenden Ansprüche, ferner umfassend mindestens eine der folgenden Auswahlmöglichkeiten:
Auswahl des Außendurchmessers aus einer Gruppe, bestehend aus: 6-9 mm, 7-8 mm und 7,5 mm.

4. Hilfsvorrichtung (20) nach Anspruch 1, wobei das neutronenabsorbierende Material Gadolinium, insbesondere in Form von Gd₂O₃, umfasst.

5. Hilfsvorrichtung (20) nach einem der Ansprüche 1 und 4, wobei der prozentuale Anteil des neutronenabsorbierenden Materials in jedem der Stäbe (22) 3-12 % beträgt und der prozentuale Anteil des Spaltmaterials in jedem der Stäbe (22) 88-97 % beträgt.

6. Hilfsvorrichtung (20) nach einem der vorangehenden Ansprüche, wobei das Spaltmaterial und das neutronenabsorbierende Material miteinander gemischt sind.

7. Hilfsvorrichtung (20) nach Anspruch 6, wobei das Spaltmaterial und das neutronenabsorbierende Material in Pellets (32) enthalten sind, die in dem Innenraum (31) des Hüllrohres (30) enthalten sind.

8. Hilfsvorrichtung (20) nach einem der vorangehenden Ansprüche, wobei die Hilfsvorrichtung (20) 4 bis 24 der Stäbe (22) umfasst.

9. Hilfsvorrichtung (20) nach einem der vorangehenden Ansprüche, wobei jeder der Stäbe (22) eine Länge aufweist, die der Länge der Brennstäbe (10) des Brennstabbündels (2a) entspricht.

10. Hilfsvorrichtung (20) nach einem der vorangehenden Ansprüche, wobei die Hilfsvorrichtung (20) eine Anzahl von länglichen Stopfen (40) umfasst, die an der Tragstruktur (21) befestigt sind und sich parallel zueinander und zu den Stäben (22) in einer von der Tragstruktur (21) weg verlaufenden Richtung erstrecken, und wobei die länglichen Stopfen (40) dazu ausgestaltet sind, in ein jeweiliges Führungsfingerhutrohr (11), das keinen der Stäbe (22) aufnimmt, eingeführt zu werden.

11. Brennstabbündel (2a) für einen Druckwasserreaktor, *Pressurized Water Reactor-*PWR, umfassend Brennstäbe (10) und eine Mehrzahl von Führungsfingerhutrohren (11), die sich inmitten der Brennstäbe (10) befinden und parallel zu diesen verlaufen,
**dadurch gekennzeichnet, dass** das Brennstabbündel (2a) eine Hilfsvorrichtung (20) nach einem der Ansprüche 1 bis 10 umfasst und dass die Stäbe (22) der Hilfsvorrichtung (20) in ein jeweiliges von zumindest einigen der Führungsfingerhutrohre (11) eingeführt sind.

12. Verfahren zum Betrieb eines Druckwasserreaktors, *Pressurized Water Reactor-*PWR, umfassend eine Mehrzahl von ersten Brennstabbündeln (2a) und zweiten Brennstabbündeln (2b), wobei die ersten Brennstabbündel (2a) frischen Kernbrennstoff umfassen und die zweiten Brennstabbündel (2b) teilweise abgebrannten Kernbrennstoff umfassen, **dadurch gekennzeichnet, dass** das Verfahren den Schritt des Einführens von Hilfsvorrichtungen (20) nach einem der Ansprüche 1 bis 10 in Führungsfingerhutrohre (11) von zumindest einigen der ersten Brennstabbündel (2a) umfasst.

13. Verfahren nach Anspruch 12, umfassend den vorangehenden Schritt des Beschickens des Kerns (3) des Druckwasserreaktors mit den ersten und zweiten Brennstabbündeln (2a, 2b), wobei die Hilfsvorrichtungen (20) mindestens vor dem Starten des Druckwasserreaktors eingeführt werden.

14. Verfahren nach Anspruch 13, umfassend den weiteren Schritt des Entnehmens der Hilfsvorrichtungen (20) aus den jeweiligen ersten Brennstabbündeln (2a) nach einem ersten Brennstoffkreislauf.

15. Verfahren nach einem der Ansprüche 12 bis 14, umfassend den weiteren Schritt des Einführens von Steuerstäben in Führungsfingerhutrohre (11) eines der ersten Brennstabbündel (2a), wobei diese Führungsfingerhutrohre (11) keinen der Stäbe (22) aufnehmen.

## Revendications

1. Dispositif auxiliaire (20) pour un ensemble de combustible (2a) d'un réacteur à eau sous pression, REP, dans lequel l'ensemble de combustible (2a) comprend des barres de combustible (10) et une pluralité de chaussettes de guidage (11) situées parmi et parallèlement aux barres de combustible (10) et configurées pour permettre l'introduction de barres de commande et/ou de dispositifs d'instrumentation,
dans lequel le dispositif auxiliaire (20) comprend
une structure porteuse (21), et
une pluralité de barres (22) suspendues dans la structure porteuse (21) pour s'étendre parallèlement les unes par rapport aux autres dans une direction s'éloignant de la structure porteuse (21),
dans lequel chacune des barres (22) comprend un tube de gainage (30) définissant un espace intérieur (31),
dans lequel les barres (22) sont configurées pour être insérées dans l'une respective d'au moins une partie des chaussettes de guidage (11) de l'ensemble de combustible (2a),
dans lequel chacune des barres (22) comprend une quantité majeure d'une matière fissile contenue dans l'espace intérieur (31) du tube de gainage (30),
dans lequel la matière fissile comprend de l'uranium enrichi,
**caractérisé en ce que** chacune des barres (22) comprend une quantité mineur d'un matériau absorbant les neutrons comprenant au moins un parmi le gadolinium, le bore et l'erbium et étant contenu dans l'espace intérieur (31) du tube de gainage (30), et
dans lequel chacune des barres (22) a un diamètre extérieur qui est plus petit qu'un diamètre intérieur de la chaussette de guidage respective (11) de sorte qu'il y ait en utilisation un écoulement de frigorigène dans un espace annulaire (15) entre la barre (22) et la chaussette de guidage (11) .

2. Dispositif auxiliaire (20) selon la revendication 1, dans lequel l'uranium de la matière fissile a une concentration en U²³⁵ qui se situe dans la plage comprise entre 1 et 3 %.

3. Dispositif auxiliaire (20) selon l'une quelconque des revendications précédentes, comprenant en outre au moins l'une des sélections suivantes :
sélection du diamètre extérieur dans un groupe constitué de : 6 à 9 mm, 7 à 8 mm, et 7,5 mm.

4. Dispositif auxiliaire (20) selon la revendication 1, dans lequel le matériau absorbant les neutrons comprend du gadolinium, notamment sous forme de Gd₂O₃.

5. Dispositif auxiliaire (20) selon l'une quelconque des revendications 1 et 4, dans lequel le pourcentage de matériau absorbant les neutrons dans chacune des barres (22) est de 3 à 12 % et le pourcentage de matière fissile dans chacune des barres (22) est de 88 à 97 %.

6. Dispositif auxiliaire (20) selon l'une quelconque des revendications précédentes, dans lequel la matière fissile et le matériau absorbant les neutrons sont mélangés l'un avec l'autre.

7. Dispositif auxiliaire (20) selon la revendication 6, dans lequel la matière fissile et le matériau absorbant les neutrons sont contenus dans des pastilles (32) contenues dans l'espace intérieur (31) du tube de gainage (30).

8. Dispositif auxiliaire (20) selon l'une quelconque des revendications précédentes, dans lequel le dispositif auxiliaire (20) comprend 4 à 24 desdites barres (22).

9. Dispositif auxiliaire (20) selon l'une quelconque des revendications précédentes, dans lequel chacune des barres (22) a une longueur qui correspond à la longueur des barres de combustible (10) de l'ensemble de combustible (2a).

10. Dispositif auxiliaire (20) selon l'une quelconque des revendications précédentes, dans lequel le dispositif auxiliaire (20) comprend un certain nombre de bouchons allongés (40) fixés à la structure porteuse (21) et s'étendant parallèlement les uns aux autres et aux barres (22) dans une direction s'éloignant de la structure porteuse (21), et dans lequel les bouchons allongés (40) sont configurés pour être insérés dans une chaussette de guidage respective (11) ne recevant aucune des barres (22).

11. Ensemble de combustible (2a) pour un réacteur à eau sous pression, REP, comprenant des barres de combustible (10) et une pluralité de chaussettes de guidage (11) situées parmi et parallèlement aux barres de combustible (10),
**caractérisé en ce que** l'ensemble de combustible (2a) comprend un dispositif auxiliaire (20) selon l'une quelconque des revendications 1 à 10 et **en ce que** les barres (22) du dispositif auxiliaire (20) sont insérées dans l'une respective d'au moins certaines des chaussettes de guidage (11) .

12. Procédé de fonctionnement d'un réacteur à eau sous pression, REP, comprenant une pluralité de premiers ensembles de combustible (2a) et de seconds ensembles de combustible (2b), dans lequel les premiers ensembles de combustible (2a) comprennent du combustible nucléaire frais et les seconds ensembles de combustible (2b) comprennent du combustible nucléaire partiellement brûlé, **caractérisé en ce que** le procédé comprend l'étape d'introduction de dispositifs auxiliaires (20) selon l'une quelconque des revendications 1 à 10 dans des chaussettes de guidage (11) d'au moins certains des premiers ensembles de combustible (2a).

13. Procédé selon la revendication 12, comprenant l'étape précédente de chargement des premier et second ensembles de combustible (2a, 2b) dans le noyau (3) du réacteur à eau sous pression, dans lequel les dispositifs auxiliaires (20) sont introduits au moins avant que le réacteur à eau sous pression ne démarre.

14. Procédé selon la revendication 13, comprenant l'étape supplémentaire de retrait des dispositifs auxiliaires (20) à partir des premiers ensembles de combustible respectifs (2a) après un premier cycle de combustible.

15. Procédé selon l'une quelconque des revendications 12 à 14, comprenant l'étape supplémentaire d'introduction de barres de commande dans les chaussettes de guidage (11) de l'un des premiers ensembles de combustible (2a), lesquelles chaussettes de guidage (11) ne reçoivent aucune des barres (22).
